(19) Europäisches Patentamt / European Patent Office / Office européen des brevets

(11) **EP 2 876 458 B1**

(12) **EUROPEAN PATENT SPECIFICATION**

(45) Date of publication and mention
of the grant of the patent:
**13.02.2019 Bulletin 2019/07**

(51) Int Cl.:
*G01S 5/00* *(2006.01)*     *G01S 5/22* *(2006.01)*

(21) Application number: **14189472.5**

(22) Date of filing: **20.10.2014**

(54) **Transformer substation multi-target accurate sound positioning system**

Genaues Mehrfachziel-Positionierungssystem mit Transformatorunterstation

Système de positionnement précis multi-cibles de sous-station de transformation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2013 CN 201310495593**

(43) Date of publication of application:
**27.05.2015 Bulletin 2015/22**

(73) Proprietors:
- **State Grid Corporation of China (SGCC)
  Beijing 100031 (CN)**
- **Jiangsu Electric Power Company
  Nanjing, Jiangsu 210024 (CN)**
- **Wuxi Electric Power Company of
  Jiangsu Electric Power Corporation
  Wuxi Jiangsu 214000 (CN)**

(72) Inventors:
- **Zhu, Jun
  214000 Wuxi (CN)**
- **Dong, Bin
  200120 Shanghai (CN)**
- **Wu, Xi
  2104000 Wuxi (CN)**

- **Jiang, Hua
  200120 Shanghai (CN)**
- **Wang, Zheng
  214000 Wuxi (CN)**

(74) Representative: **AWA Sweden AB
P.O. Box 665
831 27 Östersund (SE)**

(56) References cited:
**US-A- 5 882 204     US-A- 6 141 293
US-A1- 2002 031 050     US-A1- 2011 306 370
US-A1- 2012 274 515**

- VILLADANGOS J M ET AL: "Improvement of ultrasonic beacon-based local position system using multi-access techniques", INTELLIGENT SIGNAL PROCESSING, 2005 IEEE INTERNATIONAL WORKSHOP ON SEPT. 1, 2005, PISCATAWAY, NJ, USA,IEEE, 1 September 2005 (2005-09-01), pages 352-357, XP010852365, ISBN: 978-0-7803-9030-0
- "Method for time-difference-of-arrival estimation for an ultrasonic pen positioning system", IP.COM JOURNAL, IP.COM INC., WEST HENRIETTA, NY, US, 22 April 2007 (2007-04-22), XP013120168, ISSN: 1533-0001

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The invention relates to a positioning system, and in particular a transformer substation multi-target accurate positioning system, which belongs to the technical field of positioning of transformer substations.

## Background Art

Safety in production is the foundation of all kinds of work of an electric power company, and with the continuous development of the power grid, the number of the transformer substations is increasing day by day, so it appears particularly important to produce safely to ensure the stable operation of the power grid. Transformation operation and maintenance, which assumes important tasks such as operation and maintenance and management of the transformer substation, a switching operation and incident handling in the power system, is the performer for ensuring that the power grid operates safely, stably and economically, and the safe pressure is gradually increasing. To strengthen the safety management of the transformation operation and maintenance and prevent safety accidents of the transformer substation, many companies, organizations and groups are active in the research of the safety protection technique practical in the sites of the transformation operation and maintenance, and strive to ensure that the operation sites of the transformation operation and maintenance are controlled, controllable, and in control.

According to the actual operating condition, the control of the dangerous source in the operation practices is the key of establishing the site safety protection. Currently, the operation and maintenance of some transformer substations achieves the safety production management on the site by means of video monitoring, RFID (Radio Frequency Identification), remote scheduling and other techniques. At present, the remote monitoring management means of the video monitoring technique is comparatively frequently used to master the working state of the person on the site. But in the actual application process, since the video monitoring device is installed in a relatively fixed manner, an observation dead angle is left, and the timeliness in the safety protection and monitoring is not high. The RFID cooperates with an RFID reader-writer via an RFID tag carried by the operator to monitor whether the person is in an area, and since the area on which the RFID acts is narrow, and the identification process needs the active cooperation of the person, no automatic and real time monitoring can be achieved. The remote scheduling refers to that the operator operates an operation device by operating a computer in a control room away from the operation device, which ensures the personal safety of the operator. This technique cannot cover all the device operations, and some device operations are still to be achieved manually by the operator on the site himself/herself. The patent specification US 6 141 293 discloses a positioning system as defined in the preamble of claim 1. The patent specification US 5 882 204 discloses a sonic tracking system comprising environmental sensors for detecting environmental parameters such as the temperature and relative humidity.

## Summary of the Invention

The object of the invention is to overcome the disadvantages existing in the prior art, and provide a transformer substation multi-target accurate positioning system, which can position site plants in the transformer substation, identify and dynamically position the operator, ensure that the operator operates according to rules, and provide alarm bases for a violation operation which is out of scope or time, which is performed on wrong operation objects, or which destructs safety precautions.

According to the technical solution provided by the invention, a transformer substation multi-target accurate positioning system is defined in independent claim 1.

When the wireless data transmission base station processes the decoded information transmitted by the sound positioning beacon node, the wireless data transmission base station is required to receive the positioning information transmitted by no less than four sound positioning beacon nodes, the positioning information including a time when the ultrasonic positioning signal arrives at the sound positioning beacon node, a difference among times when the ultrasonic positioning signal sent by the intelligent positioning terminal arrives at different sound positioning beacon nodes calculated by the wireless data transmission base station under a same time standard, and the position coordinate of the operator wearing the intelligent positioning terminal obtained by trilateration.

The ultrasonic positioning signal sent by the intelligent positioning terminal is an ultrasonic signal adopting an ultrasonic spread spectrum coding technique, and the frequency band of the ultrasonic positioning signal is 20K-25KHz.

The wireless data transmission base station is connected with a backstage monitoring server, and the wireless data transmission base station transmits the position coordinate of the operator wearing the intelligent positioning terminal to the backstage monitoring server so as to form tracking of the mobile trajectory of the operator in the backstage monitoring server.

The sound positioning beacon node transmits the positioning information to the wireless data transmission base station via Ethernet.

The intelligent positioning terminal comprises a terminal processor, which has its output terminal being connected with a loudspeaker via an audio DAV circuit and a power amplifier, which has its input terminal being connected with a terminal temperature and humidity sensor, and which is also connected with a terminal wireless communication module.

The sound positioning beacon node comprises a node processor, which has its input terminal being connected with an MEMS microphone via a sound wave receiving circuit, which is also connected with a node wireless communication module and a node Ethernet module, and which has its input terminal being connected with a node temperature and humidity sensor.

The wireless data transmission base station comprises a base station processor, which is connected with a base station wireless communication module and a base station Ethernet module, respectively.

The invention has the following advantages: the ultrasonic signal sent by the intelligent positioning terminal adopts ultrasonic spread spectrum coding, the transmission distance of the ultrasonic signal is multiplied under the same power output, different pseudo random codes are set in the intelligent positioning terminal, the sound positioning beacon node can identify ultrasonic positioning signals sent by a plurality of intelligent positioning terminals at the same time, and meanwhile has a comparatively high timeliness, the positioning time cycle is extremely short, the multipath effect caused by reflections by a building or other solids can be effectively resisted, the Doppler effect produced in the moving process of the target can be effectively resisted, and comparatively high reliability and positioning accuracy are possessed. The wireless time synchronization technique among the wireless data transmission base station, the sound positioning beacon node and the intelligent positioning terminal occupies an extremely small wireless bandwidth, has a high accuracy, has a large scope of action, has no limitation in its number of nodes, can position site plants in the transformer substation, identify and dynamically position the operator, ensure that the operator operates according to rules, and provide alarm bases for a violation operation which is out of scope or time, which is performed on wrong operation objects, or which destructs safety precautions, and is safe and reliable.

## Brief Description of the Drawings

Fig. 1 is a schematic diagram of the use state of the invention;
Fig. 2 is a schematic diagram of the structure of performing the position calculation by trilateration of the invention;
Fig. 3 is a schematic diagram of the sound positioning beacon node distinguishing different intelligent positioning terminals of the invention;
Fig. 4 is a schematic diagram of performing the time synchronization of the invention;
Fig. 5 is a schematic diagram of the connection of the invention;
Fig. 6 is a structure block diagram of the sound positioning beacon node of the invention;
Fig. 7 is a circuit principle diagram of the connection of the MEMS microphone in the sound positioning beacon node with the node processor of the invention;
Fig. 8 is a working flow chart of the sound positioning beacon node of the invention;
Fig. 9 is a structure block diagram of the intelligent positioning terminal of the invention;
Fig. 10 is a structure block diagram of the wireless data transmission base station of the invention.

Explanations of the reference signs: 1- transformer substation, 2- transformer room, 3-wireless data transmission base station, 4- sound positioning beacon node, 5- base station connector, 6- backstage monitoring server, 7- intelligent positioning terminal, 8- node processor, 9- node power supply, 10- MEMS microphone, 11- sound wave receiving circuit, 12- node wireless communication module, 13- node interface circuit, 14- node temperature and humidity sensor, 15- node Ethernet module, 16- terminal processor, 17- lithium battery, 18- power manager, 19- terminal temperature and humidity sensor, 20- terminal interface circuit, 21-terminal wireless communication module, 22- audio DAC circuit, 23- power amplifier, 24-loudspeaker, 25- base station processor, 26- base station power supply, 27- base station wireless communication module, 28- base station communication interface circuit, 29- base station Ethernet module, 30- analog to digital conversion circuit.

## Detailed Description

The invention is further described below by taking the specific figures and embodiments into consideration:

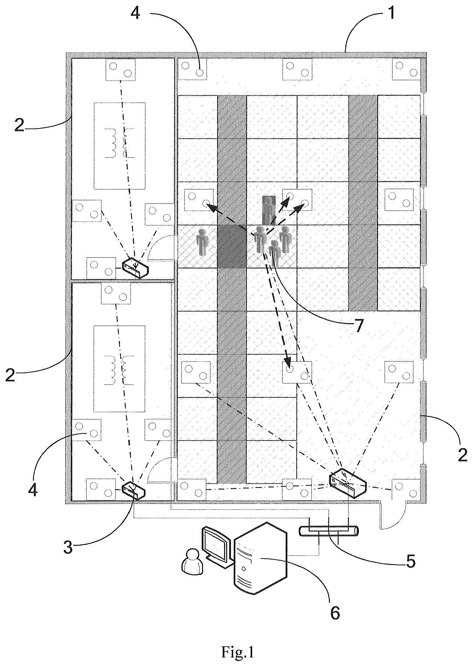

As shown in Fig. 1: in order to position site plants in the transformer substation, identify and dynamically position the operator, ensure that the operator operates according to rules, and provide alarm bases for a violation operation which is out of scope or time, which is performed on wrong operation objects, or which destructs safety precautions, the positioning system of the invention comprises an intelligent positioning terminal 7, a sound positioning beacon node 4 and a wireless data transmission base station 3, wherein

the intelligent positioning terminal 7, which is worn by an operator, can match with the sound positioning beacon node 4 so as to perform a time synchronization on the sound positioning beacon node 4 after receiving a time synchronization signal sent by the wireless data transmission base station 3, and send an ultrasonic positioning signal after the completion of the time synchronization;

the sound positioning beacon node 4, which is fixed in a set space and has a specific position coordinate, can receive the time synchronization signal transmitted by the wireless data transmission base station 3 and the ultrasonic positioning signal sent by the intelligent positioning terminal 7, and can decode the ultrasonic signal sent by the intelligent positioning terminal 7 to obtain positioning information by matching with the intelligent positioning terminal 7 so as to perform the time synchronization after receiving the time synchronization signal, and transmit the positioning information to the wireless data transmission base station 3; and

the wireless data transmission base station 3, which is installed in the set space, processes the positioning information transmitted by the sound positioning beacon node 4 so as to obtain the position coordinate of the operator wearing the intelligent positioning terminal 7.

Specifically, the intelligent positioning terminal 7, the sound positioning beacon node 4 and the wireless data transmission base station 3 are all positioned in a transformer room 2 of a transformer substation 1, one or more transformer rooms 2 are disposed in the transformer station 1, the sound positioning beacon nodes 4 are fixed to a wall surface or ceiling in a monitor area in an evenly dispersed manner, the wireless data transmission station 3 is installed at the inlet of the transformer room 2, and the intelligent positioning terminal 7 is worn by the operator entering the transformer room 2. In the embodiment of the invention, one transformer room 2 is just one monitor area, Fig. 1 shows a structure where three transformer rooms 2 are disposed in the transformer substation 1, each transformer room 2 is provided with the wireless data transmission station 3 and the sound positioning beacon node 4, generally, one transformer room 2 is provided with at least four sound positioning beacon nodes 4, and the sound positioning beacon node 4 has its own fixed position coordinate after being installed.

The ultrasonic positioning signal sent by the intelligent positioning terminal 7 is an ultrasonic signal adopting an ultrasonic spread spectrum coding technique, and the frequency band of the ultrasonic positioning signal is 20K-25KHz. In the embodiment of the invention, the ultrasonic spread spectrum coding technique is adopted, and the ultrasonic spread spectrum coding technique uses a combination of the pseudo random noise coding technique and the orthogonal spread spectrum coding technique, uses the frequency band of the ultrasonic wave of 20K-25KHz, can spread the propagation distance of the ultrasonic wave, reduces the number of sound positioning beacon nodes, makes the system be more available, and uses the pseudo random noise coding technique with respect to the ultrasonic positioning signal. The principle is that a group of narrow pulses are continuously sent, and the total length of time is elongated to increase the total energy of the group of pulses, so that the positioning distance is multiplied.

In order to achieve the ability of distinguishing multiple targets, a pseudo random noise coding manner having excellent self-correlation and cross-correlation characteristics is adopted, if the code phase is aligned, a wide pulse is restored, and if the code phase is not aligned, only noise is obtained. By using the benefit that wide pulse positioning and narrow pulse positioning can be kept at the same time after the pseudo random coding and the advantage of the cross-correlation thereof, a good multi-target orthogonality can be ensured to achieve distinguishing multi-target code sequences, and by distributing different pseudo random codes to different intelligent positioning terminals 7, which pseudo random codes have a comparatively good cross-correlation, the sound positioning beacon node 4 can distinguish the corresponding intelligent positioning terminal 7 according to the different pseudo random code. Meanwhile, distinguishing the multi-target code sequences can achieve that the multiple targets send the ultrasonic positioning signals at the same time, and the signals of the multiple targets do not interfere with one another, which requires no peak staggering in time, effectively reduces the total time required to position multiple targets, and ensures that the timeliness of the system is not influenced by the number of the targets. In the embodiment of the invention, the multiple targets refer to that there are a plurality of intelligent positioning terminals 7 in the monitor area, and the plurality of intelligent positioning terminals 7 can be positioned at the same time.

In order to improve the positioning accuracy and reliability of the positioning of the system, the coding orthogonality is used to make the multipath signal be dividable, and by considering that the direct path signal arrives first, the signal component that arrives first is selected, and other signal components are discarded, which solves the problem of the multipath effect caused by reflections by objects. Since the target to be positioned is a person capable of moving freely, the ultrasonic positioning signal will produce the Doppler effect in the moving process of the person to deviate the signal frequency. In order to solve the problem brought by the Doppler effect, before the ultrasonic spread spectrum coding of the signal, an ultrasonic signal having a fixed frequency is firstly transmitted, so that the sound positioning beacon node estimates the Doppler shift, performs a frequency compensation and corrects the Doppler effect of the ultrasonic signal that will be caused by a moving object.

When the wireless data transmission base station 3 processes the decoded information transmitted by the sound positioning beacon node 4, the wireless data transmission base station 3 is required to receive the positioning information transmitted by no less than four sound positioning beacon nodes 4, the positioning information including a time when the ultrasonic positioning signal arrives at the sound positioning beacon node 4, a difference among times when the ultrasonic positioning signal sent by the intelligent positioning terminal 7 arrives at different sound positioning beacon nodes 4 calculated by the wireless data transmission base station 3 under a same time standard, and the position coordinate of the operator wearing the intelligent positioning terminal 7 obtained by trilateration.

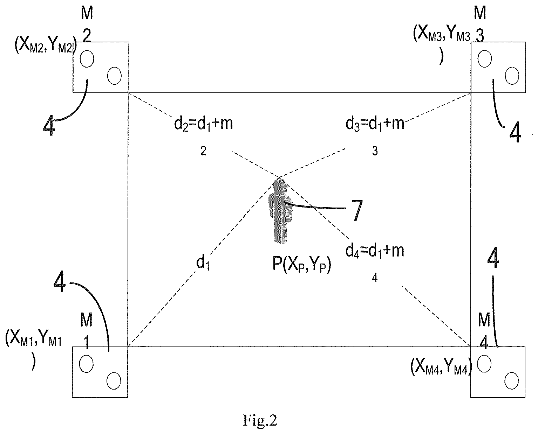

Specifically, as shown in Fig. 2, the intelligent positioning terminal 7 sends the ultrasonic positioning signal which has undergone the pseudo random coding, and if no less than four sound positioning beacon nodes 4 (the position coordinates of these nodes are known) receive the ultrasonic signals, the wireless data transmission base station 3 can calculate the distances between the intelligent positioning terminal 7 and at least three sound positioning beacon nodes 4 by calculating a difference among times when the ultrasonic positioning signal sent by the intelligent positioning terminal 7 arrives at the respective sound positioning beacon nodes 4 under the same time standard, and then can calculate the position of the intelligent positioning terminal using the principle of trilateration to thereby achieve the function of the accurate positioning. As shown in Fig. 2:

M1, M2, M3 and M4 are all the sound positioning beacon nodes 4, and their coordinates are M1 $(X_{M1}, Y_{M1})$, M2 $(X_{M2}, Y_{M2})$, M3 $(X_{M3}, Y_{M3})$ and M4 $(X_{M4}, Y_{M4})$, P is the operator wearing the intelligent positioning terminal 7, and its coordinate is P $(X_P, Y_P)$, d1, d2, d3 and d4 are the distances from the point P to M1, M2, M3 and M4, and $m_2$, $m_3$ and $m_4$ are respectively the distance differences of d2-d1, d3-d1 and d4-d1. The formulae are as follows:

$$\begin{cases} m_2 = \sqrt{(X_P - X_{M2})^2 - (Y_P - Y_{M2})^2} - \sqrt{(X_P - X_{M1})^2 - (Y_P - Y_{M1})^2} \\ m_3 = \sqrt{(X_P - X_{M3})^2 - (Y_P - Y_{M3})^2} - \sqrt{(X_P - X_{M1})^2 - (Y_P - Y_{M1})^2} \\ m_4 = \sqrt{(X_P - X_{M4})^2 - (Y_P - Y_{M4})^2} - \sqrt{(X_P - X_{M1})^2 - (Y_P - Y_{M1})^2} \end{cases}$$

where, m2, m3 and m4 can be obtained by the difference among times when the ultrasonic positioning signal arrives at the M1 sound positioning beacon node 4, the M2 sound positioning beacon node 4, the M3 sound positioning beacon node 4 and the M4 sound positioning beacon node 4, and the coordinate P $(X_P, Y_P)$ of the operator P can be calculated, i.e., the determination of the position coordinate of the operator wearing the intelligent positioning terminal 7 can be achieved, just by solving the above group of ternary quadratic equations.

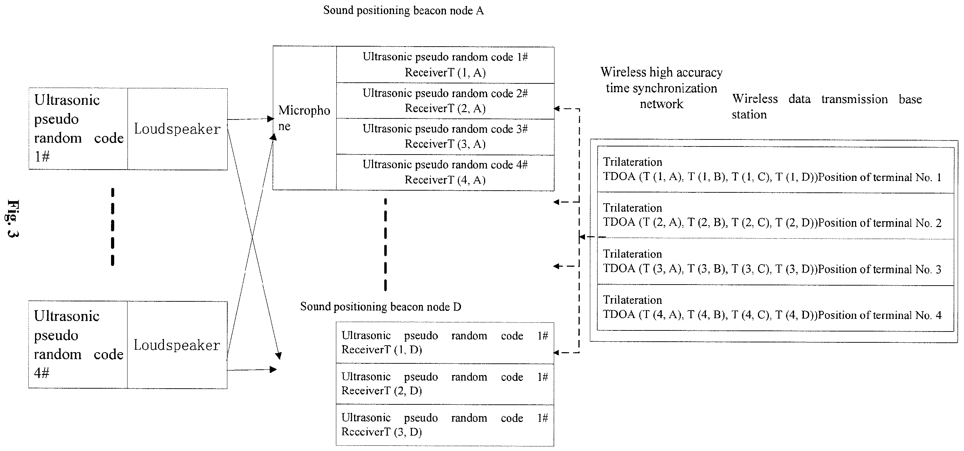

In the embodiment of the invention, with respect to the ability of distinguishing multiple targets, different pseudo random codes CODE(i) are distributed to different intelligent positioning terminals 7, where i refers to the serial number of the intelligent positioning terminal 7, and these pseudo random codes have a comparatively good cross-correlation, so that the sound positioning beacon node 4 can distinguish the corresponding target according to the different pseudo random code. As shown in Fig. 3:

During the specific implementation, different pseudo random codes are formulated with respect to the four intelligent positioning terminals 7, the coded ultrasonic positioning signals are sent via a loudspeaker 24, the ultrasonic positioning signals sent by the intelligent positioning terminals 7 No. 1 through No. 4 are received at the sound positioning beacon nodes 4, decoding is performed to identify the serial numbers of the respective intelligent positioning terminals 7 via the different pseudo random codes, data marked with the information of the arrival time, the serial numbers of the intelligent positioning terminals 7 and the serial numbers of the sound positioning beacon nodes 4 is transmitted to the wireless data transmission base station 3 via Ethernet, and the wireless data transmission base station 3 performs a calculation to obtain the position information of the intelligent positioning terminals 7 No. 1 through No. 4.

In order to improve the positioning accuracy, the wireless data transmission base station 3 performs a time synchronization on the sound positioning beacon node 4 via radio frequency, and the wireless data transmission base station 3 sends a short distance radio frequency signal (i.e., a signal synchronization signal) to synchronize times among the sound positioning beacon nodes 4 to ensure that the time error among the sound positioning beacon nodes 4 is within 5 μs. The achieving process is as follows: the time synchronization signal sent by the wireless data transmission base station 3 includes a system time T, and the intelligent positioning terminal 7 and the sound positioning beacon node 4 receive the time synchronization signal at times T3 and T2, respectively. The intelligent positioning terminal 7 sends an acknowledgement packet at a time T4 after a time, the acknowledgement packet sent by the intelligent positioning terminal 7 includes a time interval Ts, where Ts=T4-T3, and the neighboring sound positioning beacon node 4 receives the acknowledgement packet at a time T5. T is the internal absolute time of the wireless data transmission base station 3, i.e., the overall time, T2 is the internal absolute time of the sound positioning beacon node 4, T3 is the internal absolute time of the intelligent positioning terminal 7, T4 is the internal absolute time of the intelligent positioning terminal 7, Ts is the time difference of T4-T3, T5 is the internal absolute time of the sound positioning beacon node 4, and Tr is the internal absolute time of the sound positioning beacon node 4 (Tr and T1 are the same point in terms of the physical time, and are only different in the reference objects).

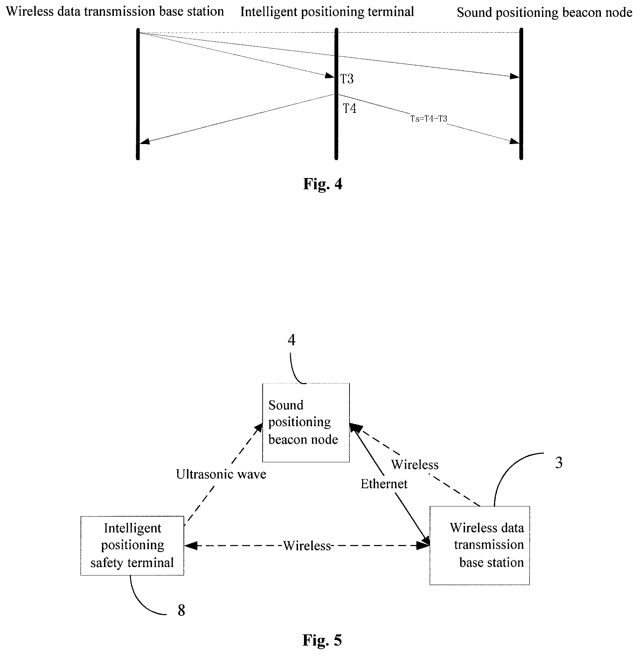

Tr=2*T2-T5+Ts, Tr is the relative time of the overall time T1 at the sound positioning beacon node 4, and the time sequence thereof is as shown in Fig. 4: an error introduced by a radio frequency chip in a transceiving process and a transmission delay error of parts of the data packets can be shielded by the above time synchronization process, and the time synchronization of a lot of beacon nodes can be achieved by an extremely small signal bandwidth occupancy. The actual working process is as follows: the sound positioning beacon node 4 receives the ultrasonic positioning signal at a time Tc, and Tc is the internal absolute time of the sound positioning beacon node 4, and is required to be converted into an overall time Ta: Ta=Tc-T2+Tr, where Ta is the overall time of the sound positioning beacon node 4 receiving the ultrasonic positioning signal.

Further, the intelligent positioning terminal 7 measures a terminal environment temperature and humidity value of an environment in which the intelligent positioning terminal 7 is located, and transmits the terminal environment temperature and humidity value to the sound positioning beacon node 4 via the ultrasonic positioning signal; and the sound positioning beacon node 4 measures a node environment temperature and humidity value of an environment in which sound positioning beacon node 4 is located at the same time, the sound positioning beacon node 4 transmits both the decoded terminal environment temperature and humidity value and node environment temperature and humidity value to the wireless data transmission base station 3, and the wireless data transmission base station 3 processes the terminal environment temperature and humidity value and the node environment temperature and humidity value so as to perform a temperature compensation on the positioning information.

In the embodiment of the invention, the processing of the wireless data transmission base station 3 on the terminal environment temperature and humidity value and the node environment temperature and humidity value includes averaging the terminal environment temperature and humidity and the node environment temperature and humidity, and correcting the propagation speed of the ultrasonic wave in the monitor area via the obtained average value of the temperature and humidity values to reduce the calculation error of the positioned coordinate caused by the error of the sound propagation speed and improve the calculation accuracy.

In the embodiment of the invention, the wireless data transmission base station 3 uses the average value of the temperature and humidity values to correct the propagation speed of the ultrasonic wave in the monitor area. Details are given as follows:

$$v = v_0 \sqrt{\left(1+\frac{t}{T_0}\right)\left(1+0.3192\frac{r\,p_s}{p}\right)}$$

where v is the propagation speed of the ultrasonic wave from the intelligent positioning terminal 7 to the sound positioning beacon node 4 under the actual temperature, t is the average indoor temperature, $t=(t_z+t_j)/2$, $t_z$ is the temperature value measured by the intelligent positioning terminal 7, $t_j$ is the temperature value measured by the sound positioning beacon node 4, $v_0$ is the propagation speed of the ultrasonic wave in the gas at 0°C, $T_0$ is the thermodynamic temperature value at 0°C, p is the standard atmospheric pressure, ps is the saturated vapor pressure of the air at the room temperature, r is the relative humidity, $r=(r_z+r_j)/2$, $r_z$ is the humidity value measured by the intelligent positioning terminal 7, and $r_j$ is the humidity value measured by the sound positioning beacon node 4, thereby obtaining distance difference corrections as follows:

$$m_2 = V_{pm2}\,(T_{m2}-T_{m1});$$

$$m_3 = V_{pm3}\,(T_{m3}-T_{m1});$$

$$m_4 = V_{pm4}\,(T_{m4}-T_{m1});$$

where $V_{pm2}$ is the actual sound speed from the intelligent positioning terminal 7 to the M2 sound positioning signal node 4, $V_{pm3}$ is the actual sound speed from the intelligent positioning terminal 7 to the M3 sound positioning signal node 4,

$V_{pm4}$ is the actual sound speed from the intelligent positioning terminal 7 to the M4 sound positioning signal node 4, $Tm_1$, $Tm_2$, $Tm_3$ and $Tm_4$ are respectively the absolute times when the ultrasonic signal arrives at the M1 sound positioning signal node 4, the M2 sound positioning signal node 4, the M3 sound positioning signal node 4 and the M4 sound positioning signal node 4.

The wireless data transmission base station 3 is connected with a backstage monitoring server 6, and the wireless data transmission base station 3 transmits the position coordinate of the operator wearing the intelligent positioning terminal 7 to the backstage monitoring server 6 so as to form tracking of the mobile trajectory of the operator in the backstage monitoring server 6. The backstage monitoring server 6 connects the wireless data transmission base station 3 via a base station connector 5, and the base station connector 5 can adopt a matching device such as a signal collector or concentrator. The backstage monitoring server 6 can provide alarm bases for a violation operation which is out of scope or time, which is performed on wrong operation objects, or which destructs safety precautions according to the information of the positioned coordinate fed back by the wireless data transmission base station 3 to ensure the safety of the operator during the operation.

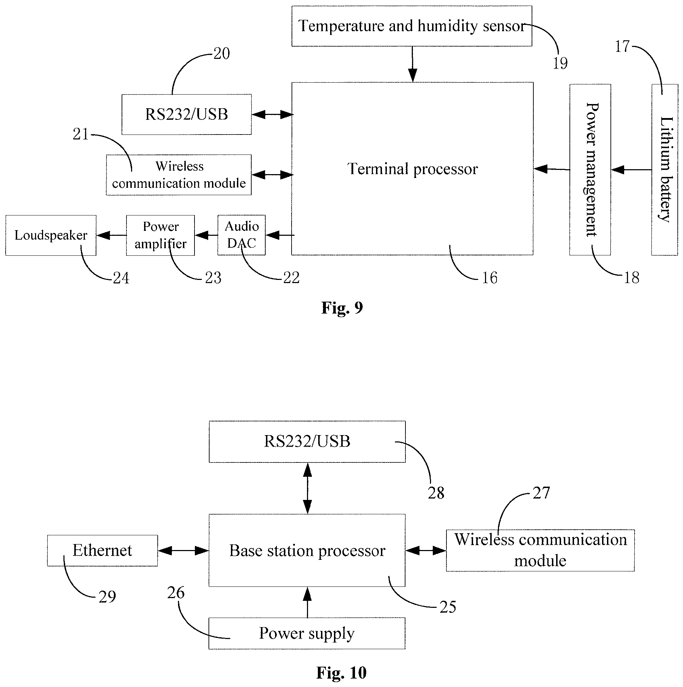

As shown in Fig. 9: the intelligent positioning terminal 7 comprises a terminal processor 16, which has its output terminal being connected with a loudspeaker 24 via an audio DAV circuit 22 and a power amplifier 23, which has its input terminal being connected with a terminal temperature and humidity sensor 19, and which is also connected with a terminal wireless communication module 21.

Specifically, the terminal processor 16 can adopt a conventional micro-processing chip, e.g., a chip microcomputer, etc., the terminal processor 16 sends the coded signal in the form of the ultrasonic wave via the audio DAC circuit 22, the power amplifier 23 and the loudspeaker 24, and the serial numbers are preset in the terminal processor 16 to make the sound positioning beacon node 4 perform a distinguishing identification. The terminal temperature and humidity sensor 19 transmits the collected temperature and humidity value to the terminal processor 16, the terminal wireless communication module 21 is used for a wireless connection with the wireless data transmission base station 3, the terminal wireless communication module 21 can be in a matched connection with the base station wireless communication module 27, the terminal wireless communication module 21 can adopt a wireless communication form of 2.4 GHz, the power supply end of the terminal processor 16 is connected with a lithium battery 17 via a power manager 18, a power supply can be performed on the entire intelligent positioning terminal 7 via the lithium battery 17, and the power manager 18 can manage the working sate of the lithium battery 17. The terminal processor 16 is further connected with a terminal interface circuit 20, and the terminal interface circuit 20 can adopt a USB or RS232 interface form.

Each intelligent positioning terminal 7 is equipped with fixed pseudo random code numbers, each time a wireless time synchronization signal sent by the wireless data transmission base station 3 is received to perform the time synchronization, a code stream formulated into ultrasonic positioning signals beforehand is sent to the audio DAC circuit 22, the audio DAC circuit 22 converts the digital code stream into analog signals, the coded signal is amplified via the power amplifier 23, and the loudspeaker 24 converts the amplified analog signals into sound wave signals to be propagated into the air.

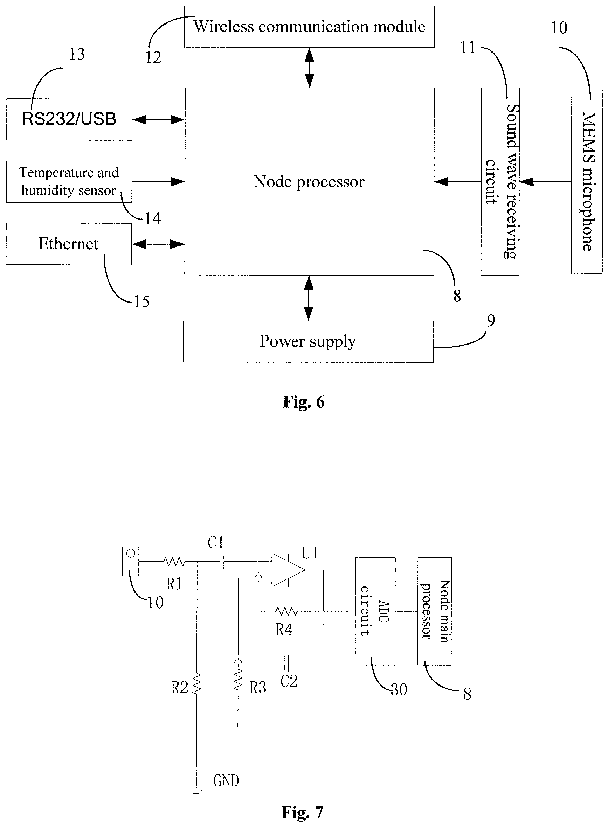

As shown in Fig. 6: the sound positioning beacon node 4 comprises a node processor 8, which has its input terminal being connected with an MEMS microphone 10 via a sound wave receiving circuit 11, which is also connected with a node wireless communication module 12 and a node Ethernet module 15, and which has its input terminal being connected with a node temperature and humidity sensor 14.

Specifically, the node processor 8 can also adopt a conventional micro-processing chip, the node processor 8 achieves the desired time synchronization via the wireless connection between the node wireless communication module 12 and the wireless data transmission base station 3, the sound positioning beacon node 4 achieves an Ethernet connection with the wireless data transmission base station 3 via the node Ethernet module 15, and the sound positioning beacon node 4 transmits the decoded ultrasonic positioning information and all the temperature and humidity values to the wireless data transmission base station 3 via Ethernet. The power supply end of the node processor 8 is connected with a node power supply 9, the node processor 8 is further connected with the node interface circuit 13, and the node interface circuit 13 includes a USB (Universal Serial Bus) or RS232 interface. The node processor 8 receives the ultrasonic positioning signal sent by the intelligent positioning terminal 7 via the MEMS (Micro-Electro-Mechanic System) microphone 10, the ultrasonic positioning signal is transmitted to the node processor 8 after being processed by the sound wave receiving circuit 11, and the node processor 8 decodes the ultrasonic positioning signal.

As shown in Fig. 7: the sound wave receiving circuit 11 comprises an operational amplifier U1, an input end of the operational amplifier U1 is connected with one end of a first capacitance C1 and one end of a fourth resistance R4, the other end of the first capacitance C1 is connected with one end of a first resistance R1, one end of a second resistance R2 and one end of a second capacitance C2, the other end of the first resistance R1 is connected with the MEMS microphone 10, the other end of the second resistance R2 is grounded, the other end of the second capacitance C2 is connected with an output end of the operational amplifier U1, the other end of the fourth resistance R4 is connected with the node processor 8 via an analog to digital conversion circuit 30, and the other end of the operational amplifier U1 is grounded via a third resistance R3.

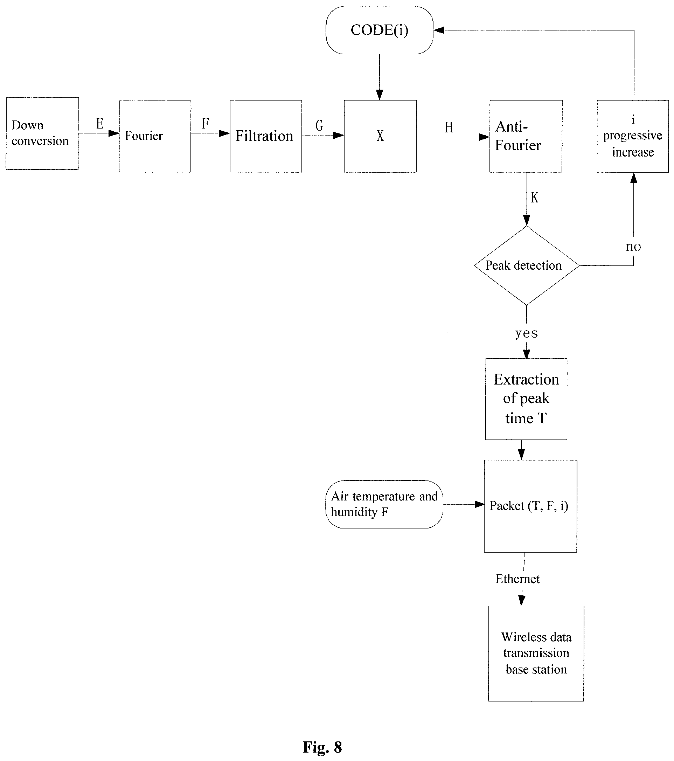

As shown in Fig. 8: the MEMS microphone 10 receives the ultrasonic positioning signal in the space, the ultrasonic positioning signal is converted into an analog signal volume via the sound wave receiving circuit 11, frequency band information other than the ultrasonic signal is filtered, sampling is performed via the analog to digital conversion circuit 30, and the analog signal is converted into digital data to enter the node processor 8.

The node processor 8 firstly performs a down conversion on the signal to obtain data E to thereby reduce the amount of data operation to expedite the succeeding data processing speed. Then, a discrete Fourier calculation is performed to obtain corresponding frequency domain data F, only effective data near the ultrasonic frequency band of the data are kept, and the data of other frequency bands are discarded to obtain G. G is multiplied by the random code CODE(i) frequency data and resolved to obtain corresponding data H, and then an anti-discrete Fourier calculation is performed on the data H to obtain K. It is obtained whether or not there is an obvious peak value in the data K by calculating an average difference of the data K, if there is an obvious peak value, the time T of the peak value is recorded and the index number i of the CODE(i), the time T of the peak value and the measurement value F of the air by the temperature and humidity sensor are transmitted to the wireless data transmission base station 3 via Ethernet, and if there is no obvious peak value, another random code CODE(i) is selected again to perform the matching till the matched one is found.

As shown in Fig. 10: the wireless data transmission base station 3 comprises a base station processor 25, which is connected with the base station wireless communication module 27 and the base station Ethernet module 29, respectively.

The base station processor 25 can adopt a conventional micro-processing chip, the base station processor 25 can perform the time synchronization on the intelligent positioning terminal 7 and the sound positioning beacon node 4 via the base station wireless communication module 27, and the base station processor 25 can perform the desired data transmission with the sound positioning beacon node 4 via the base station Ethernet module 29. The power supply end of the base station processor 25 is connected with a base station power supply 26, the base station processor 25 is further connected with a base station interface circuit 28, and the base station interface circuit 28 includes a USB interface or RS232 interface.

The base station processor 25 receives the data transmitted by the sound positioning beacon node 4 via Ethernet, analyzes the data, resolves the data via the peak time T, the temperature and humidity value F, the serial number i of the intelligent positioning terminal 7 included in the data packets sent by the respective sound positioning beacon nodes 4, calculates the positions of the respective intelligent positioning terminals 7 by an arrival time difference, performs the calculation by adopting different sound wave propagation speeds according to different T values, and identifies the different intelligent positioning terminals 7 according to i. In the entire positioning process, the wireless data transmission base station is responsible for performing the time synchronization on the whole network when wireless time synchronization frames are sent at intervals in a time synchronization master position.

As shown in Fig. 1 and Fig. 5: the operator wears the intelligent positioning terminal 7 and starts the intelligent positioning terminal 7 before entering the monitor area, and the intelligent positioning terminal 7 monitors the time synchronization signal transmitted by the wireless data transmission base station 3 all the time. When entering the wireless communication coverage area of the wireless data transmission base station 3, the intelligent positioning terminal 7 receives the time synchronization signals sent by the intelligent positioning terminal 7 at intervals, and performs the time synchronization with the sound positioning beacon node 4 and sends ultrasonic positioning signals at set intervals. In the embodiment of the invention, the ultrasonic positioning signals include a terminal environment temperature and humidity value of an environment in which the intelligent positioning terminal 7 is located. The sound positioning beacon node 4 installed in the transformer room 2 receives the ultrasonic positioning signals, decodes the ultrasonic positioning signals, and sends the ultrasonic positioning signals to the wireless data transmission base station 3 via Ethernet to be processed. The wireless data transmission base station 3 receives the data transmitted by the respective sound positioning beacon nodes 4, calculates a difference among times when the ultrasonic positioning signal arrives at different sound positioning beacon nodes 4, and obtains the position coordinate of the intelligent positioning terminal 7 by performing the calculation by trilateration, i.e., calculating the indoor position coordinate of the intelligent positioning terminal 7, and the mobile trajectory of the target person wearing the intelligent positioning terminal is tracked by adaptive signal processing. The backstage monitoring server 6 judges whether or not the operator is in a safety position with respect to the position coordinate of the operator, and gives a warning.

In the invention, the ultrasonic signal sent by the intelligent positioning terminal 7 adopts ultrasonic spread spectrum coding, the transmission distance of the ultrasonic signal is multiplied under the same power output, different pseudo random codes are set in the intelligent positioning terminal 7, the sound positioning beacon node 4 can identify ultrasonic positioning signals sent by a plurality of intelligent positioning terminals at the same time, and meanwhile has a comparatively high timeliness, the positioning time cycle is extremely short, the multipath effect caused by reflections by a building or other solids can be effectively resisted, the Doppler effect produced in the moving process of the target can be effectively resisted, and comparatively high reliability and positioning accuracy are possessed. The wireless time synchronization technique among the wireless data transmission base station 3, the sound positioning beacon node 4 and the intelligent positioning terminal 7 occupies an extremely small wireless bandwidth, has a high accuracy, has a large scope of action, has no limitation in its number of nodes, can position site plants in the transformer substation, identify and dynamically position the operator, ensure that the operator operates according to rules, and provide alarm bases for a violation operation which is out of scope or time, which is performed on wrong operation objects, or which destructs safety precautions, and is safe and reliable.

**Claims**

1. A transformer substation multi-target accurate positioning system, said positioning system comprising

   an intelligent positioning terminal (7),
   a sound positioning beacon node (4), and
   a wireless data transmission base station (3),

   wherein the intelligent positioning terminal (7) is arranged to be worn by an operator and for matching with the sound positioning beacon node (4) so as to perform a time synchronization on the sound positioning beacon node (4) after receiving a time synchronization signal sent by the wireless data transmission base station (3), and send an ultrasonic positioning signal after the completion of the time synchronization;

   the sound positioning beacon node (4), which is fixed in a set space and has a specific position coordinate, is arranged for
   receiving the time synchronization signal transmitted by the wireless data transmission base station (3) and the ultrasonic positioning signal sent by the intelligent positioning terminal (7),
   decoding the ultrasonic signal sent by the intelligent positioning terminal (7) to obtain positioning information by matching with the intelligent positioning terminal (7) so as to perform the time synchronization after receiving the time synchronization signal, and transmitting the positioning information to the wireless data transmission base station (3); and
   the wireless data transmission base station (3), which is installed in the set space, is arranged for processing the positioning information transmitted by the sound positioning beacon node (4) so as to obtain the position coordinate of the operator wearing the intelligent positioning terminal (7), wherein said system is **characterized in that**
   the intelligent positioning terminal (7) measures a terminal environment temperature and humidity value of an environment in which the intelligent positioning terminal (7) is located, and
   transmits the terminal environment temperature and humidity value to the sound positioning beacon node (4) via the ultrasonic positioning signal; and
   the sound positioning beacon node (4) measures a node environment temperature and humidity value of an environment in which sound positioning beacon node (4) is located at the same time, the sound positioning beacon node (4) transmits both the decoded terminal environment temperature and humidity value and node environment temperature and humidity value to the wireless data transmission base station (3), and the wireless data transmission base station (3) processes the terminal environment temperature and humidity value and the node environment temperature and humidity value so as to perform a temperature compensation on the positioning information.

2. The transformer substation multi-target accurate positioning system according to claim 1, **characterized in that** when the wireless data transmission base station (3) processes the decoded information transmitted by the sound positioning beacon node (4), the wireless data transmission base station (3) is required to receive the positioning information transmitted by no less than four sound positioning beacon nodes (4), the positioning information including a time when the ultrasonic positioning signal arrives at the sound positioning beacon node (4), a difference among times when the ultrasonic positioning signal sent by the intelligent positioning terminal (7) arrives at different sound positioning beacon nodes (4) calculated by the wireless data transmission base station (3) under a same time standard, and the position coordinate of the operator wearing the intelligent positioning terminal (7) obtained by trilateration.

3. The transformer substation multi-target accurate positioning system according to claim 1, **characterized in that** the ultrasonic positioning signal sent by the intelligent positioning terminal (7) is an ultrasonic signal adopting an ultrasonic spread spectrum coding technique, and the frequency band of the ultrasonic positioning signal is 20K-25KHz.

4. The transformer substation multi-target accurate positioning system according to claim 1, **characterized in that** the wireless data transmission base station (3) is connected with a backstage monitoring server (6), and the wireless data transmission base station (3) transmits the position coordinate of the operator wearing the intelligent positioning terminal (7) to the backstage monitoring server (6) so as to form tracking of the mobile trajectory of the operator in the backstage monitoring server (6).

5. The transformer substation multi-target accurate positioning system according to claim 1, **characterized in that** the sound positioning beacon node (4) transmits the positioning information to the wireless data transmission base station (3) via Ethernet.

6. The transformer substation multi-target accurate positioning system according to claim 1, **characterized in that** the intelligent positioning terminal (7) comprises a terminal processor (16), which has its output terminal being connected with a loudspeaker (24) via an audio DAV circuit (22) and a power amplifier (23), which has its input terminal being connected with a terminal temperature and humidity sensor (19), and which is also connected with a terminal wireless communication module (21).

7. The transformer substation multi-target accurate positioning system according to claim 1, **characterized in that** the sound positioning beacon node (4) comprises a node processor (8), which has its input terminal being connected with an MEMS microphone (10) via a sound wave receiving circuit (11), which is also connected with a node wireless communication module (12) and a node Ethernet module (15), and which has its input terminal being connected with a node temperature and humidity sensor (14).

8. The transformer substation multi-target accurate positioning system according to claim 1, **characterized in that** the wireless data transmission base station (3) comprises a base station processor (25), which is connected with a base station wireless communication module (27) and a base station Ethernet module (29), respectively.

9. A transformer substation multi-target accurate positioning system according to claim 1, wherein the wireless data transmission base station (3) processing the terminal environment temperature and humidity value and the node environment temperature and humidity value so as to perform a temperature compensation on the positioning information, further comprises averaging the terminal environment temperature and humidity and the node environment temperature and humidity, and correcting the propagation speed of the ultrasonic wave in the monitor area via the obtained average value of the temperature and humidity values.

**Patentansprüche**

1. Genaues Mehrfachziel-Positionierungssystem mit Transformatorunterstation, wobei das Positionierungssystem Folgendes umfasst:

ein intelligentes Positionierungsendgerät (7),
einen Schallpositionierungs-Beacon-Knoten (4) und
eine Basisstation (3) für Funkdatenübertragung,
wobei das intelligente Positionierungsendgerät (7) dafür eingerichtet ist, von einem Bediener getragen zu werden und sich nach Empfangen eines durch die Basisstation (3) für Funkdatenübertragung gesendeten Zeitsynchronisierungssignals mit dem Schallpositionierungs-Beacon-Knoten (4) abzugleichen, um am Schallpositionierungs-Beacon-Knoten (4) eine Zeitsynchronisierung durchzuführen, und nach Abschluss der Zeitsynchronisierung ein Ultraschall-Positionierungssignal zu senden,
der Schallpositionierungs-Beacon-Knoten (4), welcher sich ortsfest in einem festgelegten Raum befindet und eine bestimmte Positionskoordinate aufweist, eingerichtet ist für
Empfangen des durch die Basisstation (3) für Funkdatenübertragung übertragenen Zeitsynchronisierungssignals und des durch das intelligente Positionierungsendgerät (7) gesendeten Ultraschall-Positionierungssignals,
Decodieren des durch das intelligente Positionierungsendgerät (7) gesendeten Ultraschallsignals, um durch Abgleichen mit dem intelligenten Positionierungsendgerät (7) zum Durchführen der Zeitsynchronisierung nach Empfangen des Zeitsynchronisierungssignals Positionierungsinformationen zu erhalten, und
Übertragen der Positionierungsinformationen an die Basisstation (3) für Funkdatenübertragung, und
die Basisstation (3) für Funkdatenübertragung, die in dem festgelegten Raum installiert ist, eingerichtet ist zum Verarbeiten der durch den Schallpositionierungs-Beacon-Knoten (4) übertragenen Positionierungsinformationen, um die Positionskoordinate des das intelligente Positionierungsendgerät (7) tragenden Bedieners zu erhalten, wobei das System **dadurch gekennzeichnet ist, dass**

das intelligente Positionierungsendgerät (7) eine Endgerät-Umgebungstemperatur und einen Endgerätumgebungs-Feuchtigkeitswert einer Umgebung misst, in welcher sich das intelligente Positionierungsendgerät (7) befindet, und

die Endgerät-Umgebungstemperatur und den Endgerätumgebungs-Feuchtigkeitswert über das Ultraschall-Positionierungssignal an den Schallpositionierungs-Beacon-Knoten (4) überträgt, und

der Schallpositionierungs-Beacon-Knoten (4) gleichzeitig eine Knoten-Umgebungstemperatur und einen Knotenumgebungs-Feuchtigkeitswert einer Umgebung misst, in welcher sich der Schallpositionierungs-Beacon-Knoten (4) befindet, der Schallpositionierungs-Beacon-Knoten (4) sowohl die decodierte Endgerät-Umgebungstemperatur und den Endgerätumgebungs-Feuchtigkeitswert als auch die Knoten-Umgebungstemperatur und den Knotenumgebungs-Feuchtigkeitswert an die Basisstation (3) für Funkdatenübertragung überträgt, und die Basisstation (3) für Funkdatenübertragung die Endgerät-Umgebungstemperatur und den Endgerätumgebungs-Feuchtigkeitswert und die Knoten-Umgebungstemperatur und den Knotenumgebungs-Feuchtigkeitswert verarbeitet, um an den Positionierungsinformationen einen Temperaturausgleich vorzunehmen.

2. Genaues Mehrfachziel-Positionierungssystem mit Transformatorunterstation nach Anspruch 1, **dadurch gekennzeichnet, dass** es, wenn die Basisstation (3) für Funkdatenübertragung die durch den Schallpositionierungs-Beacon-Knoten (4) übertragenen decodierten Informationen verarbeitet, erforderlich ist, dass die Basisstation (3) für Funkdatenübertragung die von nicht weniger als vier Schallpositionierungs-Beacon-Knoten (4) übertragenen Positionierungsinformationen empfängt, wobei die Positionierungsinformationen eine Zeit, zu der das Ultraschall-Positionierungssignal am Schallpositionierungs-Beacon-Knoten (4) eintrifft, eine durch die Basisstation (3) für Funkdatenübertragung nach einem gleichen Zeitstandard berechnete Differenz zwischen Zeiten, zu denen das durch das intelligente Positionierungsendgerät (7) gesendete Ultraschall-Positionierungssignal an verschiedenen Schallpositionierungs-Beacon-Knoten (4) eintrifft, und die durch Trilateration erhaltene Positionskoordinate des das intelligente Positionierungsendgerät (7) tragenden Bedieners beinhalten.

3. Genaues Mehrfachziel-Positionierungssystem mit Transformatorunterstation nach Anspruch 1, **dadurch gekennzeichnet, dass** es sich bei dem durch das intelligente Positionierungsendgerät (7) gesendeten Ultraschall-Positionierungssignal um ein Ultraschallsignal handelt, das eine Ultraschall-Spreizspektrumcodiertechnik einsetzt, und das Frequenzband des Ultraschall-Positionierungssignals 20K bis 25KHz beträgt.

4. Genaues Mehrfachziel-Positionierungssystem mit Transformatorunterstation nach Anspruch 1, **dadurch gekennzeichnet, dass** die Basisstation (3) für Funkdatenübertragung mit einem Backstage-Überwachungsserver (6) verbunden ist und die Basisstation (3) für Funkdatenübertragung die Positionskoordinate des das intelligente Positionierungsendgerät (7) tragenden Bedieners an den Backstage-Überwachungsserver (6) überträgt, um im Backstage-Überwachungsserver (6) eine Nachverfolgung der Bewegungstrajektorie des Bedieners zu bilden.

5. Genaues Mehrfachziel-Positionierungssystem mit Transformatorunterstation nach Anspruch 1, **dadurch gekennzeichnet, dass** der Schallpositionierungs-Beacon-Knoten (4) die Positionierungsinformationen über Ethernet an die Basisstation (3) für Funkdatenübertragung überträgt.

6. Genaues Mehrfachziel-Positionierungssystem mit Transformatorunterstation nach Anspruch 1, **dadurch gekennzeichnet, dass** das intelligente Positionierungsendgerät (7) einen Endgerätprozessor (16) umfasst, dessen Ausgangsanschluss über eine Audio-DAV-Schaltung (22) und einen Leistungsverstärker (23) mit einem Lautsprecher (24) verbunden ist, dessen Eingangsanschluss mit einem Endgerättemperatur- und Feuchtigkeitssensor (19) verbunden ist, und der zudem mit einem Endgerät-Funkkommunikationsmodul (21) verbunden ist.

7. Genaues Mehrfachziel-Positionierungssystem mit Transformatorunterstation nach Anspruch 1, **dadurch gekennzeichnet, dass** der Schallpositionierungs-Beacon-Knoten (4) einen Knotenprozessor (8) umfasst, dessen Eingangsanschluss über eine Schallwellen-Empfangsschaltung (11) mit einem MEMS-Mikrofon (10) verbunden ist, der zudem mit einem Knoten-Funkkommunikationsmodul (12) und einem Knoten-Ethernetmodul (15) verbunden ist, und dessen Eingangsanschluss mit einem Knotentemperatur- und Feuchtigkeitssensor (14) verbunden ist.

8. Genaues Mehrfachziel-Positionierungssystem mit Transformatorunterstation nach Anspruch 1, **dadurch gekennzeichnet, dass** die Basisstation (3) für Funkdatenübertragung einen Basisstationsprozessor (25) umfasst, der mit einem Basisstations-Funkkommunikationsmodul (27) bzw. einem Basisstations-Ethernetmodul (29) verbunden ist.

9. Genaues Mehrfachziel-Positionierungssystem mit Transformatorunterstation nach Anspruch 1, wobei das Verarbeiten der Endgerät-Umgebungstemperatur und des Endgerätumgebungs-Feuchtigkeitswerts und der Knoten-Umgebungstemperatur und des Knotenumgebungs-Feuchtigkeitswerts durch die Basisstation (3) für Funkdatenübertragung zum Vornehmen eines Temperaturausgleichs an den Positionierungsinformationen ferner ein Mitteln der Endgerät-Umgebungstemperatur und der Endgerät-Umgebungsfeuchtigkeit und der Knoten-Umgebungstemperatur und der Knoten-Umgebungsfeuchtigkeit und ein Korrigieren der Ausbreitungsgeschwindigkeit der Ultraschallwelle im Überwachungsbereich über den erhaltenen Mittelwert der Temperatur- und Feuchtigkeitswerte umfasst.

**Revendications**

1. Système de positionnement précis multi-cibles d'une sous-station de transformateur, ledit système de positionnement comprenant :

   un terminal de positionnement intelligent (7),
   un noeud de radio balise de positionnement sonore (4) et
   une station de base de transmission de données sans fil (3),
   dans lequel le terminal de positionnement intelligent (7) est agencé afin d'être porté par un opérateur et pour concorder avec le noeud de radio balise de positionnement sonore (4) de manière à effectuer une synchronisation temporelle sur le noeud de radio balise de positionnement sonore (4) après la réception d'un signal de synchronisation temporelle envoyé par la station de base de transmission de données sans fil (3) et envoyer un signal de positionnement ultrasonique après la fin de la synchronisation temporelle ;
   le noeud de radio balise de positionnement sonore (4), qui est fixé dans un espace réglé et a une coordonnée de position spécifique, est agencé pour
   recevoir le signal de synchronisation temporelle transmis par la station de base de transmission de données sans fil (3) et le signal de positionnement ultrasonique envoyé par le terminal de positionnement intelligent (7), décoder le signal ultrasonique envoyé par le terminal de positionnement intelligent (7) pour obtenir l'information de positionnement en concordant avec le terminal de positionnement intelligent (7) de manière à effectuer la synchronisation temporelle après la réception du signal de synchronisation temporelle, et transmettre l'information de positionnement à la station de base de transmission de données sans fil (3) ; et
   la station de base de transmission de données sans fil (3), qui est installée dans l'espace réglé, est agencée pour traiter l'information de positionnement transmise par le noeud de radio balise de positionnement sonore (4) de manière à obtenir la coordonnée de position de l'opérateur portant le terminal de positionnement intelligent (7), dans lequel ledit système est **caractérisé en ce que**
   le terminal de positionnement intelligent (7) mesure une température d'environnement de terminal et une valeur d'humidité d'un environnement dans lequel le terminal de positionnement intelligent (7) est situé et transmet la température d'environnement de terminale et la valeur d'humidité au noeud de radio balise de positionnement sonore (4) via le signal de positionnement ultrasonique ; et
   le noeud de radio balise de positionnement sonore (4) mesure une température d'environnement du noeud et une valeur d'humidité d'un environnement dans lequel le noeud de radio balise de positionnement sonore (4) est situé au même moment, le noeud de radio balise de positionnement sonore (4) transmet à la fois la température d'environnement de terminal décodée et la valeur d'humidité et une température d'environnement de noeud et une valeur d'humidité à la station de base de transmission de données sans fil (3) et la station de base de transmission de données sans fil (3) prête à la température d'environnement de terminal et la valeur d'humidité et la température d'environnement de noeud et la valeur d'humidité de manière à effectuer une compensation de température sur l'information de positionnement.

2. Système de positionnement précis multi-cibles d'une sous-station de transformateur selon la revendication 1, **caractérisé en ce que** lorsque la station de base de transmission de données sans fil (3) traite l'information décodée transmise par le noeud de radio balise de positionnement sonore (4), la station de base de transmission de données sans fil (3) est requise pour recevoir l'information de positionnement transmis par pas moins de quatre noeuds de radio balise de positionnement sonore (4), l'information de positionnement incluant une heure où le signal de positionnement ultrasonique arrive au niveau du noeud de radio balise de positionnement sonore (4), une différence parmi les heures où le signal de positionnement ultrasonique envoyé par le terminal de positionnement intelligent (7) arrive au niveau de noeuds de radio balise de positionnement sonore différents (4) calculés par la station de base de transmission de données sans fil (3) sous une même norme temporelle et la coordonnée de position de l'opérateur portant le terminal de positionnement intelligent (7) obtenue par trilatération.

3. Système de positionnement précis multi-cibles d'une sous-station de transformateur selon la revendication 1, **ca-**

**ractérisé en ce que** le signal de positionnement ultrasonique envoyé par le terminal de positionnement intelligent (7) est un signal ultrasonique adoptant une technique de codage de spectre d'étalement ultrasonique, et la bande de fréquence du signal de positionnement ultrasonique est de 20K-25KHZ.

4. Système de positionnement précis multi-cibles d'une sous-station de transformateur selon la revendication 1, **caractérisé en ce que** la station de base de transmission de données sans fil (3) est connectée avec un serveur de surveillance de coulisses (6) et la station de base de transmission de données sans fil (3) transmet la coordonnée de position de l'opérateur portant le terminal de positionnement intelligent (7) au serveur de surveillance de coulisses (6) de manière à former un suivi à la trace de la trajectoire mobile de l'opérateur dans le serveur de surveillance de coulisses (6).

5. Système de positionnement précis multi-cibles d'une sous-station de transformateur selon la revendication 1, **caractérisé en ce que** le radio balise de positionnement sonore (4) transmet l'information de positionnement à la station de base de transmission de données sans fil (3) via Ethernet.

6. Système de positionnement précis multi-cibles d'une sous-station de transformateur selon la revendication 1, **caractérisé en ce que** le terminal de positionnement intelligent (7) comprend un processeur de terminal (16), qui a son terminal de sortie connecté à un haut-parleur (24) via un circuit DAV audio (22) et un amplificateur de puissance (23), qui a son terminal d'entrée connecté avec un capteur de température et d'humidité de terminal (19) et qui est aussi connecté avec un module de communication sans fil de terminal (21).

7. Système de positionnement précis multi-cibles d'une sous-station de transformateur selon la revendication 1, **caractérisé en ce que** le radio balise de positionnement sonore (4) comprend un processeur de noeud (8), qui a son terminal d'entrée étant connecté via un microphone MEMS (10) via un circuit de réception d'onde sonore (11), qui est aussi connecté avec un module de communication sans fil de noeud (12) et un module Ethernet de noeud (15), et qui a son terminal d'entrée étant connecté avec un capteur de température et d'humidité de noeud (14).

8. Système de positionnement précis multi-cibles d'une sous-station de transformateur selon la revendication 1, **caractérisé en ce que** la station de base de transmission de données sans fil (3) comprend un processeur de station de base (25) qui est connecté avec un module de communication sans fil de station de base (27) et un module Ethernet de station de base (29), respectivement.

9. Système de positionnement précis multi-cibles d'une sous-station de transformateur selon la revendication 1, **caractérisé en ce que** la station de base de transmission de données sans fil (3) traitant la valeur d'humidité et de température d'environnement du terminal et la valeur d'humidité et de température d'environnement du noeud de manière à effectuer une compensation de température sur l'information de positionnement, comprend en outre de calculer la moyenne de l'humidité et la température d'environnement du terminal et l'humidité et la température d'environnement du noeud et de corriger la vitesse de propagation de l'onde ultrasonique dans la zone de surveillance via la valeur moyenne obtenue des valeurs de température et d'humidité .

Fig.1

M2 $(X_{M2}, Y_{M2})$

M3 $(X_{M3}, Y_{M3})$

$d_2 = d_1 + m$

$d_3 = d_1 + m$

2

3

7

$d_4 = d_1 + m$

$d_1$

$P(X_P, Y_P)$

4

M1 $(X_{M1}, Y_{M1})$

M4 $(X_{M4}, Y_{M4})$

4

4

4

4

Fig.2

Fig. 3

Wireless data transmission base station   Intelligent positioning terminal     Sound positioning beacon node

T3

T4

$Ts=T4-T3$

**Fig. 4**

**Fig. 5**

Wireless communication module

13

12

10

RS232/USB

11

Node processor

Sound wave receiving circuit

MEMS microphone

Temperature and humidity sensor

14

Ethernet

15

8

Power supply

9

**Fig. 6**

C1

U1

R1

10

R4

ADC circuit

Node main processor

R2

R3

C2

30

8

GND

**Fig. 7**

**Fig. 8**

Temperature and humidity sensor

—20

19

17—

RS232/USB

21—

Wireless
communication module

Terminal processor

Power management

Lithium battery

Loudspeaker

Power
amplifier

Audio
DAC

—24        —23        —22        —16        —18

**Fig. 9**

RS232/USB

28        —27

Ethernet

Base station processor

Wireless communication
module

—29        26        —25

Power supply

**Fig. 10**

**REFERENCES CITED IN THE DESCRIPTION**

**Patent documents cited in the description**

- US 6141293 A
- US 5882204 A